# EUROPEAN PATENT APPLICATION

(11) **EP 4 541 571 A1**
(43) Date of publication of application: **23.04.2025**
(21) Application number: 23823433.0
(22) Date of filing: 13.01.2023
(51) Int. Cl.: B29D 30/54, B60C 11/12

(54) **TIRE MANUFACTURING METHOD**

(30) Priority: 15.06.2022 JP 2022096887
(71) Applicant: BRIDGESTONE CORPORATION, Chuo-ku Tokyo 104-8340 (JP)
(72) Inventor: SAITO Osamu, Tokyo 104-8340 (JP)
(74) Representative: Marks & Clerk LLP
(86) International application number: PCT/JP2023/000861
(87) International publication number: WO 2023/243128

(57) **Abstract**

The provided is a tire manufacturing method for obtaining a tire 10 that comprises a tire body part **11** and a tread rubber part 12, comprising: a base tire preparation process S101 preparing a base tire 1, which is a tire body part of a used tire and will become the tire body part **11;** a molded tire assembly process S102 assembling a molded tire 4 by attaching tread rubber 2, which will become the tread rubber part 12, to outer circumference side of the base tire 1 prepared; a molded tire vulcanization process S103 vulcanizing the molded tire 4 assembled; and a sipe formation process S104 forming a sipe 16 on a surface 5 of a tread of the molded tire 4 vulcanized.

## Description

### TECHNICAL FIELD

The present disclosure relates to a tire manufacturing method.

This application claims priority based on Japanese Patent Application No. 2022-096887, filed in Japan on June 15, 2022, the entire contents of which are incorporated herein by reference.

### BACKGROUND

It has been known for some time that a knife or similar tool is used to form sipes (thin notches) on the tread surface of vulcanized tires (see, for example, Patent Document 1).

### CITATION LIST

### Patent Literature

PTL 1: JPS 60-240507 A

### SUMMARY

### (Technical Problem)

However, when sipes are formed on new tires, it has been found that the sipe width may widen due to the diameter growth of the tire during driving, which may prevent the full effect of the sipes from being demonstrated, such as improved wear resistance performance, and cracks may also occur more easily at the bottom of the sipes.

Therefore, an object of the present disclosure is to provide a tire manufacturing method for obtaining a tire in which the sipe width is less likely to change.

### (Solution to Problem)

The above problems will be resolved by the following means.
(1) The tire manufacturing method of the present disclosure is,
   a tire manufacturing method for obtaining a tire that comprises a tire body part and a tread rubber part, characterized in comprising:
   a base tire preparation process preparing a base tire, which is a tire body part of a used tire and will become the tire body part;
   a molded tire assembly process assembling a molded tire by attaching tread rubber, which will become the tread rubber part, to outer circumference side of the base tire prepared;
   a molded tire vulcanization process vulcanizing the molded tire assembled; and
   a sipe formation process forming a sipe on a surface of a tread of the molded tire vulcanized.

### (Advantageous Effect)

According to the present disclosure, it is possible to provide a tire manufacturing method for obtaining a tire in which the sipe width is less likely to change.

### BRIEF DESCRIPTION OF THE DRAWINGS

In the accompanying drawings:
FIG. 1 is a development view of the tread surface, illustrating an example of a tread pattern for a tire that can be obtained using a tire manufacturing method according to any embodiment of the present disclosure;
FIG. 2 is a development view of the tread surface, illustrating another example of a tread pattern for a tire that can be obtained using the tire manufacturing method according to any embodiment of the present disclosure;
FIG. 3 is a flowchart that explains the tire manufacturing method according to one embodiment of the present disclosure; and
FIGs. 4A to 4D are drawings that explain the tire manufacturing method according to one embodiment of the present disclosure. FIG. 4A illustrates a base tire that has been prepared in the base tire preparation process, FIG. 4B illustrates a molded tire that has been assembled in the molded tire assembly process, FIG. 4C illustrates the molded tire vulcanization process, and FIG. 4D illustrates the sipe formation process.

### DETAILED DESCRIPTION

The tire manufacturing method of the present disclosure can be suitably used as a manufacturing method for any type of pneumatic tires, for example, TB tires (truck and bus tires), LT tires (van and small truck tires, small truck and bus tires), OR tires (construction and mining vehicle tires), etc., and can be used particularly well as a manufacturing method for TB tires or LT tires.

Hereinafter, embodiments of the tire manufacturing method according to the present disclosure will be described by way of example with reference to the drawings.

The same components and parts are designated by the same reference numerals/symbols in each drawing.

In this document, the term "tire circumferential direction" refers to a direction in which the tire rotates around its axis of rotation, the term "tire radial direction" refers to a direction perpendicular to the axis of rotation of the tire, and the term "tire width direction" refers to a direction parallel to the axis of rotation of the tire. In some drawings, the tire circumferential direction is indicated by the symbol "CD", the tire radial direction is indicated by the symbol "RD", and the tire width direction is indicated by the symbol "WD".

In addition, in this document, the side of the tire that is closer to the tire equatorial plane CL along the tire width direction is referred to as the "inner side in the tire width direction", and the side of the tire that is farther from the tire equatorial plane CL along the tire width direction is referred to as the "outer side in tire width direction".

Further, in this document, the term "extending in the tire circumferential direction" refers to extend with at least a tire circumferential component. In other words, the term "extending in the tire circumferential direction" means that it may extend in a direction that follows the tire circumferential direction (i.e. at a 0° angle to the tire circumferential direction, without inclining with respect to the tire circumferential direction), or it may extend at an angle other than 90° to the tire circumferential direction (i.e. at an inclination angle greater than 0° and other than 90° with respect to the tire circumferential direction).

Furthermore, in this document, the term "extending in the tire with direction" refers to extend with at least a tire width direction component. In other words, the term "extending in the tire width direction" means that it may extend in a direction that follows the tire width direction (i.e. at a 0° angle to the tire width direction, without inclining with respect to the tire width direction), or it may extend at an angle other than 90° to the tire width direction (i.e. at an inclination angle greater than 0° and other than 90° with respect to the tire width direction).

Unless otherwise specified, the positional relationship and dimensions of each element shall be measured under the reference condition, with the tire mounted on the applicable rim, filled with the prescribed internal pressure, and unloaded. In addition, the outer surface of the tire that comes into contact with the road surface when the tire is mounted on the applicable rim, filled with the prescribed internal pressure, and loaded with the maximum load is called as a "tread surface", and the edge of the tread surface in the tire width direction is called as a "tread edge". Furthermore, in this document, the term the term "development view of the tread surface" refers to a planar view of the tread surface with the tread surface developed on a plane.

As used herein, the term "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States. For sizes not listed in these industrial standards, the term "applicable rim" refers to a rim with a width corresponding to the bead width of the pneumatic tire. The "applicable rim" includes current sizes as well as future sizes to be listed in the aforementioned industrial standards. An example of the "sizes to be listed in the future" could be the sizes listed as "FUTURE DEVELOPMENTS" in the ETRTO 2013 edition.

As used herein, the term "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted. Further, as used herein, the term "maximum load" means the load corresponding to the maximum load capacity in the tire of the applicable size described in the aforementioned industrial standards, or, for sizes not listed in the aforementioned industrial standards, the load corresponding to the maximum load capacity specified for each vehicle in which the tire is mounted.

### <Tire>

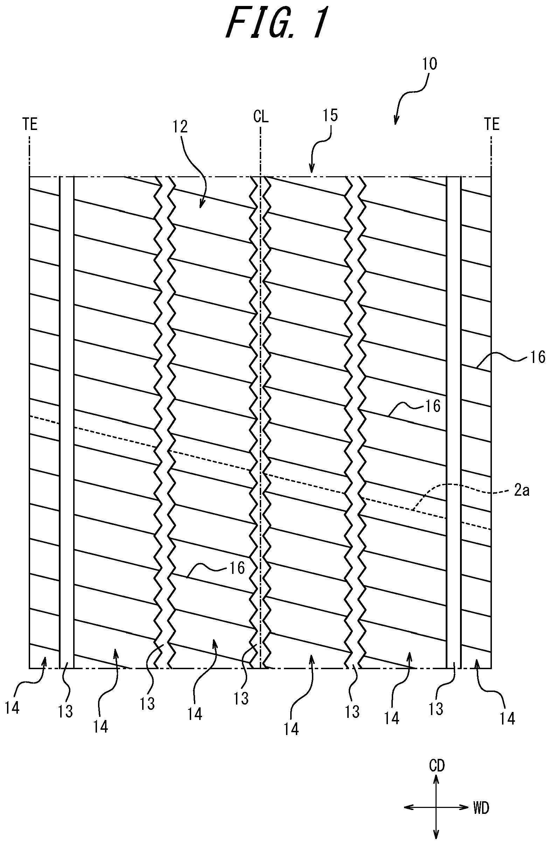

First, referring to Figures 1 to 2, we will explain examples of tread patterns for tires that can be obtained using the tire manufacturing method according to any embodiment of the present disclosure.

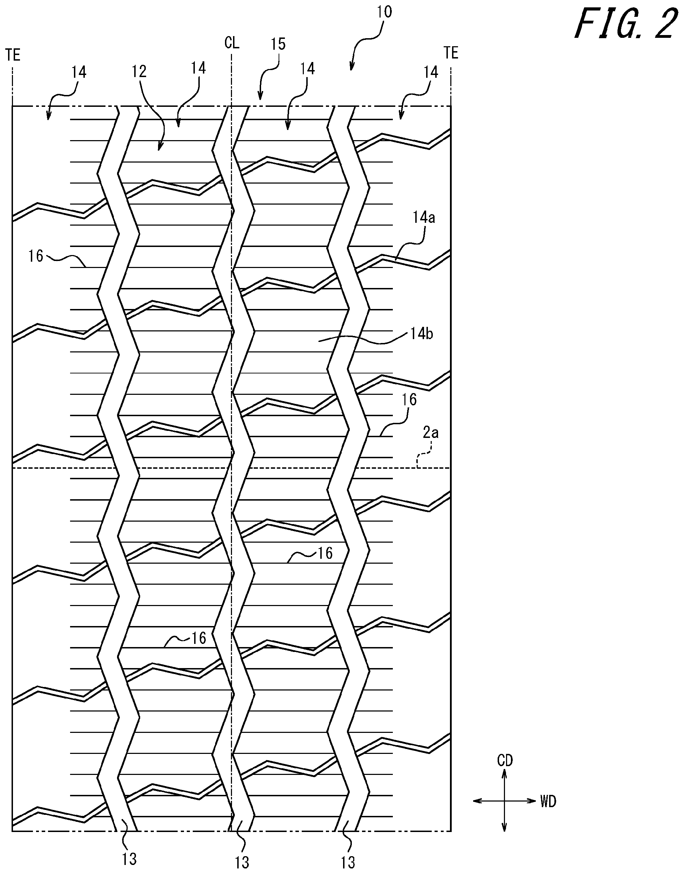

Figures 1 and 2 are development views of the tread surface, illustrating an example of a tread pattern for a tire that can be obtained using the tire manufacturing method according to any embodiment of the present disclosure.

Figure 1 illustrates an example of a tread pattern of a tire that can be obtained by the tire manufacturing method according to any embodiment of the present disclosure.

In the example illustrated in Figure 1, a tire 10 has a rib pattern on a tread surface 15 thereof. In other words, the tire 10 in this example has a plurality of (six in the illustrated example) land portions 14 that are divided in the tire width direction by a plurality of (five in the illustrated example) main grooves 13 extending in the tire circumferential direction on the tread surface 15, and each land portion 14 is a rib-shaped land portion that extends continuously in the tire circumferential direction.

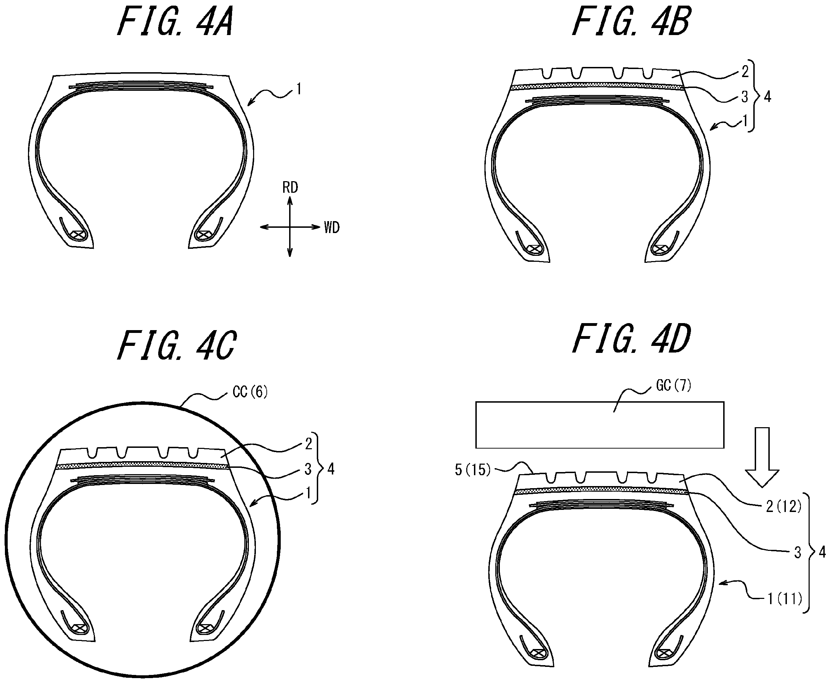

As illustrated in Figure 1, the tire in this example is provided with a sipe 16 on the land portion 14 to improve wear resistance performance, wet performance, on-ice performance, etc. To be more specific, in the example illustrated in Figure 1, each land portion 14 has a plurality of sipes 16 spaced apart from one another in the tire circumferential direction. In this example, the sipe 16, or more specifically, the plurality of sipes 16, are each provided in a way that avoids a joint portion 2a (in some cases it is difficult to see, so it is provided as a dotted line in Figure 1) of the tread rubber 2 (see Figures 4B to 4D below) (i.e., in a way that does not overlap with the joint portion 2a when the tread surface is viewed in an expanded view), as described below. In addition, in this example, as illustrated in Figure 1, the sipe 16, or more specifically, the plurality of sipes 16, are each provided in a straight line in a direction inclined with respect to the tire circumferential direction (i.e., in a direction at an angle greater than 0° relative to the tire circumferential direction in a development view of the tread surface) (more specifically, in this example, in a direction inclined with respect to the tire width direction as well). Furthermore, in this example, the sipe 16, or more specifically, the plurality of sipes 16, may be provided so that the depth of the sipes 16 increases as they approach the tire equatorial plane CL from at least one or both of the tread edges TE (not illustrated).

In addition, in this example, as illustrated in Figure 1, each sipe 16 is provided so as to cross each land portion 14 (i.e., continuously from one end to the other end in the tire width direction of each land portion 14). Furthermore, in this example, as illustrated in Figure 1, each sipe 16 is provided so as to extend in one straight line between each land portion 14, across each main groove 13 (i.e., interrupted by each main groove 13), from one tread edge TE to the other tread edge TE.

However, the tread pattern of a tire that can be obtained by the tire manufacturing method according to any embodiment of the present disclosure is not limited to the rib pattern described above. The tread pattern may be composed of a block pattern as described later with reference to Figure 2, or any other arbitrary tread pattern, as long as it has a sipe 16.

Here, in this document, the term "sipe" refers to a thin cutout in the tread surface, and more specifically, it refers to a cutout with a sipe width of 1.0 mm or less over an area of 50% or more of the depth of sipe under the reference condition described above. Here, the "depth of sipe (sipe depth)" shall be measured in a direction perpendicular to the tread surface under the above reference condition, and the "width of sipe (sipe width)" shall be measured in a direction parallel to the tread surface in a cross-section perpendicular to the extending direction of the sipe on the tread surface under the reference conditions above. The sip width may be constant or variable in the direction perpendicular to the tread surface.

Note, that the tire 10 that can be obtained by the tire manufacturing method according to any embodiment of the present disclosure comprises: a tire body part 11 (see Figure 4D) formed by (in other words, using as a material of) a base tire 1 (see Figure 4) described below; and a tread rubber part 12 (see Figures 1 to 2 and 4D) formed by (in other words, using as a material of) a tread rubber 2 (see Figure 4) described below.

The tire body part 11 may include general tire components other than a tread rubber, for example, both left and right bead portions, a carcass made up of one or more carcass plies straddling between these portions, a belt made up of one or more belt layers arranged on the outer side in the tire radial direction of the carcass, and sidewall rubber, etc. which are general tire components other than tread rubber.

The tread rubber part 12 includes at least a tread rubber which is a tire component other than the above-mentioned tire body part.

Figure 2 illustrates another example of a tread pattern for a tire that can be obtained using the tire manufacturing method according to any embodiment of the present disclosure.

In the example illustrated in Figure 2, the tire 10 has a block pattern on the tread surface 15. In other words, the tire 10 in this example has a plurality of (four in the illustrated example) land portions 14 that are divided in the tire width direction by a plurality of (three in the illustrated example) main grooves 13 extending in the tire circumferential direction on the tread surface 15, and each land portion 14 is a block-shaped land portion which has a plurality of blocks 14b that are divided in the tire circumferential direction by lateral grooves 14a extending in the tire width direction.

As illustrated in Figure 2, the tire in this example is also provided with a sipe 16 on the land portion 14 to improve wear resistance performance, wet performance, on-ice performance, etc. To be more specific, also in the example illustrated in Figure 2, each land portion 14 has a plurality of sipes 16 spaced apart from one another in the tire circumferential direction. Also in this example, the sipe 16, or more specifically, the plurality of sipes 16, are each provided in a way that avoids a joint portion 2a (in some cases it is difficult to see, so it is provided as a dotted line in Figure 2) of the tread rubber 2 (see Figures 4B to 4D below) (i.e., in a way that does not overlap with the joint portion 2a when the tread surface is viewed in an expanded view), as described below. In addition, also in this example, as illustrated in Figure 2, the sipe 16, or more specifically, the plurality of sipes 16, are each provided in a straight line in a direction inclined with respect to the tire circumferential direction (i.e., in a direction at an angle greater than 0° relative to the tire circumferential direction in a development view of the tread surface) (more specifically, at the angle of 90° with respect to the tire circumferential direction and of 0° with respect to the tire width direction, i.e. along the tire width direction, in this example). Furthermore, also in this example, the sipe 16, or more specifically, the plurality of sipes 16, may be provided so that the depth of the sipe 16 increases as they approach the tire equatorial plane CL from at least one or both of the tread edges TE (not illustrated).

In addition, in this example, as illustrated in Figure 2, each sipe 16 is provided so that: in the two land portions 14 on the inner side in the tire width direction close to the tire equatorial plane CL, it crosses each of the two land portions 14 (i.e., continuously from one end to the other end in the tire width direction of each land portion 14); while in the two land portions 14 on the outer side in the tire width direction close to the tread edge TE, it opens into the main groove 13, but does not reach the tread edge TE, and is designed to terminate within the relevant land portions 14. Furthermore, in this example, as illustrated in Figure 2, each sipe 16 is provided so as to extend in one straight line between each land portion 14, across each main groove 13 (i.e., interrupted by each main groove 13).

### <Tire manufacturing method>

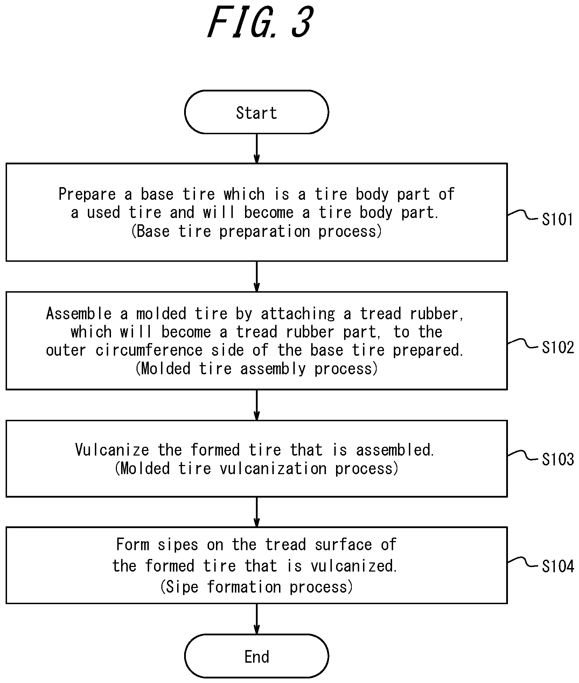

Hereinafter, a tire manufacturing method according to one embodiment of the present disclosure will be described with reference to Figures 3 and 4.

Figure 3 is a flowchart that explains the tire manufacturing method according to one embodiment of the present disclosure. Figures 4A to 4D are drawings that explain the tire manufacturing method according to one embodiment of the present disclosure. 4A illustrates a base tire that has been prepared in a base tire preparation process, 4B illustrates a molded tire that has been assembled in a molded tire assembly process, 4C illustrates a molded tire vulcanization process, and 4D illustrates a sipe formation process. Figures 4A to 4D are illustrated as schematic drawings of a cross-sectional view in the tire width direction.

The tire manufacturing method according to one embodiment of the present disclosure is a manufacturing method for so-called retread tires, and the tires obtained by the tire manufacturing method according to one embodiment of the present disclosure are retread tires.

Generally, there are two methods for manufacturing retread tires: the COLD method (also called as a Pre-cure method, etc.) and the HOT method (also called a Re-mold method, etc.). The tire manufacturing method of this disclosure can be used for both the COLD method and the HOT method. In the COLD method, a vulcanized pre-cured tread is wrapped around on the crown portion of a base tire and installed thereto via unvulcanized cushion rubber, and after the molded tire is formed, the pre-cured tread is vulcanized and bonded to the base tire at a relatively low temperature in a vulcanizing kettle. On the other hand, in the HOT method, unvulcanized tread rubber is wrapped around the crown of the base tire and installed thereto, and the tread rubber is vulcanized and bonded to the base tire at a relatively high temperature by a mold. The example illustrated in Figure 4 is an example of the manufacturing method using the COLD method.

The tire manufacturing method according to one embodiment of the present disclosure is for obtaining tires that have a tire body part 11 (see Figure 4D) and a tread rubber part 12 (see Figures 1 to 2 and Figure 4D).

As illustrated in Figure 3, the tire manufacturing method according to one embodiment of the present disclosure has a base tire preparation process (step S101), a molded tire assembly process (step S102), a molded tire vulcanization process (step S103), and a sipe formation process (step S104), in this order.

### (Base tire preparation process)

First, in the base tire preparation process, the base tire 1, which is the tire body part of the used tire and will become the tire body part 11, is prepared (step S101). As illustrated in Figure 4A, the base tire 1 is the part that used to be the tire body part of the used tire (not illustrated in the figure) from which the worn tread rubber part was removed, and it is a component that will become the tire body part 11 of the tire (see Figure 4D) which can be obtained by the tire manufacturing method of this embodiment.

The base tire preparation process may include: an acceptance inspection process to check whether the tire body parts, excluding the tread rubber parts, of used tires received from markets, etc. can be used again; and a tread rubber part removal process to remove the tread rubber parts from the used tires, etc.

### (Molded tire assembly process)

After the base tire preparation process, in the molded tire assembly process, a molded tire 4 is assembled by attaching tread rubber 2, which will become the tread rubber portion 12, to the outer circumference side of the base tire 1 which was prepared in the base tire preparation process (step S102).

The tread rubber 2 is the component that will become the tread rubber part 12 of the tire which can be obtained by the tire manufacturing method of the present disclosure (see Figures 1 to 2, and 4D). The tread rubber 2 may have a length equivalent to one circumference of the tire.

As mentioned above, the example illustrated in Figure 4 is an example of the general manufacturing method for retread tires using the COLD method. That is, in the example illustrated in Figure 4, in the molded tire assembly process, the vulcanized tread rubber 2 (generally, referred to as pre-cured tread) is wrapped around and attached to the outer surface of the base tire 1 via the unvulcanized cushion rubber 3 (see Figure 4B). In other words, in the example illustrated in Figure 4, the molded tire 4 assembled in the molded tire assembly process is a tire in which the vulcanized tread rubber 2 is wrapped around and attached (or more specifically, affixed) to the outer surface of the base tire 1 via the unvulcanized cushion rubber 3. The unvulcanized cushion rubber 3 may have a length equivalent to one circumference of the tire.

In this example, the vulcanized tread rubber 2 used in the molded tire assembly process is flat before being attached to the base tire 1, and at least tread pattern other than sipes 16 (for example, the tread pattern illustrated in Figures 1 and 2, excluding the sipes 16) is formed on the surface of the vulcanized tread rubber 2 in advance. In addition, in this example, in the molded tire assembly process, the unvulcanized cushion rubber 3 may wrapped around and attached (or more specifically, affixed) to the outer surface of the base tire 1, and then the vulcanized tread rubber 2 may be wrapped around and attached (or more specifically, affixed) to the outer surface of the unvulcanized cushion rubber 3; or the unvulcanized cushion rubber 3 and the vulcanized tread rubber 2 may be pre-attached, and the composite may be wrapped around and attached (or more specifically, affixed) to the outer surface of the base tire 1.

Note, that in this example, in the molded tire assembly process, further adhesive may be interposed between at least one of the base tire 1, the unvulcanized cushion rubber 3, and the vulcanized tread rubber 2.

As in the example above, in the molded tire assembly process, when the vulcanized tread rubber 2 is wrapped around and attached to the outer surface of the base tire 1 via the unvulcanized cushion rubber 3, it is possible to manufacture tires on a compact line, as it does not require large equipment such as a regular vulcanization mold, especially in the subsequent molded tire vulcanization process, etc.

However, the tire manufacturing method in this embodiment is not limited to the example illustrated in Figure 4, and may be the one using the HOT method among general manufacturing methods for retread tires. That is, although it is not illustrated in the figures, in the molded tire assembly process, an unvulcanized tread rubber 2 may be wrapped around and attached to the outer surface of the base tire 1 without going through the above-mentioned unvulcanized cushion rubber 3, etc. In other words, the molded tire 4 assembled in the molded tire assembly process may be a tire in which the unvulcanized tread rubber 2 is wrapped around and attached (or more specifically, affixed) to the outer surface of the base tire 1 without going through the unvulcanized cushion rubber 3, etc. In this case, the surface of the unvulcanized tread rubber 2 used in the molded tire assembly process does not need to have a tread pattern formed on it beforehand. Also, in this case, an adhesive may be used between the base tire 1 and the unvulcanized tread rubber 2 in the molded tire assembly process.

As in the example above, in the case that the unvulcanized tread rubber 2 is wrapped around and attached to the outer surface of the base tire 1 in the molded tire assembly process, since the molded tire 4 is enclosed in a vulcanization mold comprising a normal tread pattern and vulcanized in the subsequent molded tire vulcanization process, as described below, the joint portion 2a, etc. of the tread rubber 2 that are formed when the tread rubber 2 is wrapped around and attached to the outer surface of the base tire 1 will be less noticeable in the tire circumferential direction, making it easier to achieve a better appearance for the manufactured tire.

### (Molded tire vulcanization process)

After the molded tire assembly process, as illustrated in Figure 4C, the molded tire that has been assembled in the molded tire assembly process is vulcanized in the molded tire vulcanization process (step S103) (see Figure 4C). The vulcanization may be carried out using the prescribed vulcanization apapratus 6.

In the example illustrated in Figure 4 (i.e., the case of the aforementioned COLD method, in which, in the molded tire assembly process, vulcanized tread rubber 2 is wrapped around and attached to the outer surface of the base tire 1 via unvulcanized cushion rubber 3), since the surface of the vulcanized tread rubber 2 used in the molded tire assembly process already has a tread pattern, excluding at least the sipes 16, formed thereon, it is not necessary to vulcanize the molded tire in a normal vulcanization mold comprising a tread pattern in the molded tire vulcanization process. As a vulcanizing equipment 6, for example, a small vulcanizing kettle CG, as schematically illustrated in Figure 4C, may be used. The molded tire 4 is sealed in the vulcanizing kettle CG, the unvulcanized cushion rubber 3 is vulcanized by a heating and pressure treatment at a relatively low temperature, and thus, the vulcanized tread rubber 2 (pre-cured tread) can be vulcanized and bonded to the base tire 1.

On the other hand, in the case of the aforementioned HOT method, in which, in the molded tire assembly process, the unvulcanized tread rubber 2 is wrapped around and attached to the outer surface of the base tire 1, the vulcanization in the molded tire vulcanization process is carried out using a vulcanizing equipment 6 that, for example, uses a mold comprising a tread pattern (not illustrated) (which is engraved a tread pattern thereon) excluding at least sipes 16 (for example, a tread pattern such as that illustrated in Figures 1 and 2, excluding the sipes 16, with the protrusions and recesses reversed)), the molded tire 4 is sealed inside the vulcanization mold, and a heating and pressure treatment is carried out at a relatively high temperature, so that the unvulcanized tread rubber 2 can be vulcanized and bonded to the base tire 1.

However, the vulcanization method used in the molded tire vulcanization process and the vulcanizing equipment used in the molded tire vulcanization process are not limited to the above, and may be arbitrary as long as the surface 5 of the tread (see Figure 4D) of the molded tire 4 vulcanized in the molded tire vulcanization process has the necessary tread pattern, other than the sipes 16. Note, that one or more sipes 16 may be formed on the surface 5 of the tread of the molded tire 4 that has been vulcanized in the molded tire vulcanization process, in addition to the sipes 16 formed in the sipe formation process described below, as necessary.

### (Sipe formation process)

After the molded tire vulcanization process, in the sipe formation process, the sipe 16 is formed on the surface 5 of the tread of the molded tire 4 that has been vulcanized in the molded tire vulcanization process (step S104) (see Figure 4D). The formation of the sipe 16 may be carried out by the prescribed sipe forming equipment 7.

The sipe formation process can form the sipe 16 portion of the tread pattern, such as the tread pattern illustrated in Figures 1 and 2, on the surface 5 of the tread of the molded tire 4 (and thus, on the tread surface 15 of the tire 10) after the vulcanization process in the molded tire vulcanization process. Note, that in Figure 4, the main grooves, etc. formed on the surface of the tread rubber 2 (surface 5 of tread) are included for the sake of explanation, and do not correspond exactly to the configuration (number, etc.) of the main grooves 13, etc. in the tread patterns in Figures 1 and 2.

In the sipe formation process, a sipe forming equipment 7, such as a cutter (hot knife) or laser, can be used to form the sipe 16.

In the example illustrated in Figure 4, the sipe 16 is formed in the sipe formation process using a guillotine cutter GC schematically illustrated in Figure 4D as the sipe forming equipment 7. Here, the term "guillotine cutter" refers to an equipment that fixes the tire in a way that allows it to rotate around its rotation axis, and then uses a blade (thin blade) that can be moved in the tire radial direction to form a sipe while rotating the tire little by little, with the tire mounted on the rim and filled with a low internal pressure (about 50 kPa) that is just enough to fit the rim. In Figure 4D, the white arrow pointing downwards illustrates the appearance of the guillotine cutter GC (or more specifically, the blade of the guillotine cutter GC) moving radially inward towards the surface 5 of the tread of the molded tire 4 after vulcanization, in order to form the sipe.

The above-mentioned guillotine cutter GC is suitable for forming a plurality of sipes on a surface 5 of a tread, which has a rib pattern, etc., where the land portion 14 (see Figures 1 to 2) extends continuously in the tire circumferential direction. In addition, the above-mentioned laser is suitable for forming a plurality of sipes on a surface 5 of a tread that has a block pattern, for example, where the land portion 14 is interrupted in the tire circumferential direction.

However, the sipe forming method in the sipe formation process and the sipe forming equipment used in the sipe formation process are not particularly limited to those described above and may be any.

The preferred sipe forming method in the sipe formation process will be described in more detail later.

Next, we will explain the effects of the aforementioned tire manufacturing method according to one embodiment of the present disclosure.

First, this embodiment includes: the base tire preparation process preparing a base tire 1; the molded tire assembly process assembling a molded tire 4 by attaching tread rubber 2 to outer circumference side of the base tire 1; and the molded tire vulcanization process vulcanizing the molded tire 4, therefore, it is possible to obtain a tire (in particular, a retread tire) as usual.

In addition, according to this embodiment, in the molded tire assembly process, the tread rubber 2 is attached to the outer circumference side of the base tire 1 that has been prepared, and in the sipe formation process, the sipe 16 is formed on the surface 5 of the tread of the molded tire 4 that has been vulcanized. In other words, according to this embodiment, the base tire 1, which used to be a tire body part of a used tire, is used for the tire body part 11, and the sipe 16 is formed in the molded tire 4 after vulcanization.

Here, it is known that, for new tires obtained using normal manufacturing methods (i.e. not using a base tire), the tire diameter will grow as the tire is driven for a certain period after it is first used, and if the new tire has sipes, there is a risk that the sipe width will increase as the tire grows in diameter. In contrast, according to the present embodiment, in the molded tire assembly process, the base tire 1 whose diameter growth has already been completed is used, and thus the tire body part 11 of the manufactured tire is the base tire 1 whose diameter growth has already been completed. Therefore, compared to a normal new tire manufactured without using the base tire 1, a tire can be obtained in which the sipe width of the sipe that was initially formed is less likely to change.

In addition, for example, in the manufacturing method using the above-mentioned COLD method, one possible way is to perform the molded tire assembly process using vulcanized tread rubber (pre-cured tread) with sipes, which has been formed in advance by a cutter or other means while placed it on a flat surface. In that case, there is a risk that the sipe width will also become wider when the vulcanized tread rubber 2 is wrapped around and attached to the outer circumference of the base tire 1 during the molded tire assembly process. In contrast, in this embodiment, the sipes are formed, in the sipe formation process, after the molded tire 4 is vulcanized, therefore, compared to the case where a molded tire is assembled using vulcanized tread rubber with pre-formed sipes in the molded tire assembly process, a tire can be obtained in which the width of the initially formed sipes is less likely to change.

As described above, the tire manufacturing method according to this embodiment makes it possible to obtain a tire in which the sipe width is less likely to change, and thus, to prevent the effects of the sipes, such as improved wear resistance performance, from being not fully demonstrated or to prevent cracks from occurring at the bottom of the sipes, which would otherwise be caused by an increase in the sipe width.

Furthermore, according to this embodiment, rather than forming a sipe during vulcanization by a vulcanization mold provided with a blade for forming the sipe (for example, in the manufacturing method using the above-mentioned HOT method, one possible way is to form a sipe during vulcanization in a vulcanization mold in the molded tire vulcanization process), the sipe 16 is formed in the molded tire 4 after vulcanization using a cutter or laser, etc. in the sipe formation process, therefore, it is easy to customize the performance of each tire according to customer requirements, etc.

Next, we will explain the preferred method for forming the sipe, etc., in the sipe formation process described above.

Note, that the arrangement and composition of the sipes formed in the molded tire 4 during the sipe formation process is essentially the same as the arrangement and composition of the sipes in the tire 10 obtained by the manufacturing method. Therefore, for the sake of explanation, the following explanation will refer to Figures 1 and 2, which illustrate the relevant tire 10, as appropriate.

First, in the sipe formation process, it is preferable that the sipe 16 is formed, as illustrated in Figures 1 and 2, avoiding (not overlapping in a development view of the tread surface with) the joint portion 2a in the tire circumferential direction of the tread rubber 2 of the molded tire 4 that occurs when the tread rubber 2 is attached to the outer circumference side of the base tire 1 in the molded tire assembly process.

In this case, failures caused by the sipe 16 is less likely to occur, and therefore deterioration in the durability of the tire can be prevented.

In addition, in the sipe formation process, it is preferable that the sipe 16 is formed in a straight line in a direction that is inclined with respect to the tire circumferential direction of the molded tire 4, as illustrated in Figures 1 and 2.

In this case, the formation of the sipe 16 can be easily performed using a guillotine cutter GC with a simple straight blade, for example, so the formation of the sipe 16 becomes easier.

Furthermore, although it is not illustrated in the drawing, in the sipe formation process, it is preferable that the sipe 16 is formed so that the depth of the sipe 16 (sipe depth) becomes deeper as it approaches the center in the tire width direction of the molded tire 4 (i.e., the tire equatorial plane CL).

In the case of a molded tire 4 that has undergone the molded tire vulcanization process, the surface of the tread rubber 2 (the surface 5 of the tread, or the tread surface 15) is usually formed into a slight arc shape with a convex radius R facing radially outward in a cross-sectional view in the tire width direction. Therefore, in the above case, the formation of the sipe 16 can be easily performed using a guillotine cutter GC, for example, with a straight blade as viewed from the side, so the formation of the sipe 16 becomes easier.

In addition, in the sipe formation process, it is preferable that a plurality of the sipes 16 are formed spaced apart from one another in the tire circumferential direction of the molded tire 4 as illustrated in Figures 1 and 2.

In this case, the effects of the sipes 16, such as improved wear resistance performance, are more effectively demonstrated.

The width of the sipe (sipe width) formed in the sipe formation process is preferably 0.7 mm or less over an area of 50% or more of the sipe depth, and is more preferably 0.5 mm or less, and is even more preferably 0.4 mm or less. In addition, the width of the sipe is preferably at least 0.2 mm over an area that is at least 50% of the sipe depth. Furthermore, the sipe width is preferably 0.2 to 0.5 mm over an area of at least 50% of the sipe depth, and 0.2 to 0.4 mm is even more preferable.

The thinner the sipe width is within the range of 0.7 mm or less as described above, the more the benefits of the sipe 16, such as improved wear resistance performance, can be demonstrated, and by making it 0.2 mm or more as described above, it becomes easier to form the sipe using a cutter, etc.

In order to improve the wear resistance performance of tires, it is preferable that, in the sipe formation process, the sipe 16 is formed in a straight line in a direction that is inclined with respect to the tire circumferential direction of the molded tire4, as illustrated in Figures 1 and 2, and a plurality of sipes 16 are formed spaced apart from one another in the tire circumferential direction of the molded tire 4. In other words, it is preferable to form a plurality of straight sipes 16 that extend in the tire width direction at intervals in the tire circumferential direction in the development view of the tread surface.

In this case, the distance in the tire circumferential direction between adjacent sipes 16 in the tire circumferential direction (hereafter, it is also referred to simply as "circumferential distance between the (plurality of) circumferential grooves" etc.) is preferably 5 to 40 mm. If this interval is 5 mm or more, the rigidity of the land portion 14 will not decrease excessively (i.e. it will not become too flexible), and if it is 40 mm or less, the rigidity of the land portion 14 is reduced to a moderate degree (that is, it becomes moderately flexible), and the amount of slippage between the ground and the tire when it rotates is reduced, so in either case, it is easier to improve the wear resistance performance. From the same perspective, in the above case, it is more preferable that the circumferential spacing of the sipes 16 is 10 to 30 mm. Furthermore, from the same perspective, in the above case, the depth of the sipe 16 is preferably 40 to 100 % of the depth of the main groove 13.

Also, as mentioned above, when a plurality of sipes 16 in a straight line extending in the tire width direction are formed at intervals in the tire circumferential direction, it is preferable that the interval in the tire circumferential direction of the sipes 16 is uniform over the entire circumference in the tire circumferential direction, or in other words, that the plurality of sipes 16 are formed at equal intervals over the entire circumference in the tire circumferential direction. In this case, the wear resistance performance and other performance demonstrated by the sipes 16 can be made uniform across the entire tire circumference in the tire circumferential direction.

A plurality of ribs (for example, as illustrated in Figure 1, these result in rib-shaped land portions 14 in the manufactured tire 10) and/or blocks (for example, as illustrated in Figure 2, these result in blocks 14b in the manufactured tire 10) has formed on the surface of vulcanized tread rubber 2 (pre-cured tread) which is used in the molded tire assembly process (this is the case of the manufacturing method using the COLD method described above); or a plurality of ribs (for example, as illustrated in Figure 1, these result in rib-shaped land portions 14 in the manufactured tire 10) and/or a plurality of blocks (for example, as illustrated in Figure 2, these result in blocks 14b in the manufactured tire 10) are formed on the surface of the tread rubber 2 in the molded tire vulcanization process (this is the case of the manufacturing method using the HOT method described above), and in the sipe formation process, a plurality of sipes 16 may be formed on some or all of the plurality of ribs and/or the plurality of blocks, so that the tire circumferential spacing, depth, and/or angle with respect to the tire circumferential direction are different for each of the plurality of ribs and/or the plurality of blocks.

In this case, in the sipe formation process, for example, a guillotine cutter GC may be used to form sipes of a first type circumferentially spaced apart from one another around the tire over a portion or the entire circumference of the tire, and then sipes of a second type which is different from the first type may be formed circumferentially spaced apart from one another around the tire over a portion or the entire circumference of the tire. Furthermore, the formation of the sipes may be repeated, and sipes of a third type or more types different from the types of sipes formed up to that point may be formed.

Furthermore, in the sipe formation process, the sipe 16 may be formed across the entire width in the tire width direction of the molded tire 4 (and thus the tire 10) (see, for example, the example in Figure 1), or it may be formed only in part of the width in the tire width direction of the tire (see, for example, the example in Figure 2).

Also, in the sipe formation process, the sipe 16 may be formed across the entire width in the tire width direction of the tire in each land portion 14 defined in the tire width direction by main grooves 13 extending in the tire circumferential direction in the molded tire 4 (and thus the tire 10) (see, for example, the example in Figure 1), the sipe 16 may be formed only in part of the width in the tire width direction in at least some of the land portions 14 (see, for example, the example in Figure 2).

The above describes the preferred sipe formation method, etc., in the sipe formation process, however, the method of forming sipes in the sipe formation process is not particularly limited to the above-mentioned method, and may be arbitrary as long as the sipe 16 is formed on the tread surface 5 of the molded tire 4 that has been vulcanized in the molded tire vulcanization process.

According to the tire manufacturing method described above, which is in accordance with one embodiment of the present disclosure, for example, by forming the sipes 16, in the sipe formation process, in the molded tire 4 that has been vulcanized so that the sipes has the arrangement and configuration of the tire 10, a tire 10 which uses a tire body part of a used tire as the tire body part 11 of the tire and has a tread pattern as illustrated and explained with reference to Figures 1 and 2 can be obtained.

In addition, according to the tire manufacturing method in accordance with one embodiment of the present disclosure, for example, by using a normal guillotine cutter, etc., in which the blade thickness is constant in the depth direction of the sipe 16 to be formed in the sipe forming process, a tire 10 which comprises a tire body part 11 and a tread rubber part 12, in which the tire body part 11 is composed of a base tire 1 which used to be a tire body part of a used tire; a plurality of sipes 16 are formed on the surface of the tread rubber portion 12; and each of the aforementioned plurality of sipes 16 have a width that is substantially constant along the depth direction can be obtained. The width of the sipes in this tire 10 is not easily changed.

The above description is an example of an exemplary embodiment of the present disclosure, and various changes can be made within the scope of not deviating from the scope of the claims.

For example, in the present disclosure, in the case that, in the molded tire assembly process, the vulcanized tread rubber 2 is wrapped around and attached to the outer circumference of the base tire 1 via the unvulcanized cushion rubber 3 (i.e. in the case of the above-mentioned COLD method), there may be an additional envelope process, in which the molded tire 4 is wrapped in a rubber bag, between the molded tire assembly process and the molded tire vulcanization process. In addition, for example, in the present disclosure, there may be an inspection process, etc., which inspects whether there are any abnormalities in the molded tire 4 after vulcanization and/or the tire 10 after sipe formation, after the molded tire vulcanization process and/or the sipe formation process.

### INDUSTRIAL APPLICABILITY

The tire manufacturing method of the present disclosure can be suitably used as a manufacturing method for any type of pneumatic tire, for example, TB tires (truck and bus tires), LT tires (van and small truck tires, small truck and bus tires), OR tires (construction and mining vehicle tires), etc., and can be used particularly well as a manufacturing method for TB tires or LT tires.

### REFERENCE SIGNS LIST

- 1: Base Tire
- 2: Tread rubber
- 2a: Joint portion
- 3: Cushion rubber
- 4: Molded tire
- 5: Surface of tread
- 6: Vulcanizing equipment
- 7: Sipe forming equipment
- 10: Tire
- 11: Tire body part
- 12: Tread rubber part
- 13: Main groove
- 14: Land portion
- 14a: Lateral groove
- 14b: Block
- 15: Tread surface
- 16: Sipe
- CC: Vulcanizing kettle
- CD: Tire circumferential direction
- CL: Tire equatorial plane
- GC: Guillotine cutter
- RD: Tire radial direction
- WD: Tire width direction

## Claims

1. A tire manufacturing method for obtaining a tire that comprises a tire body part and a tread rubber part, comprising:
a base tire preparation process preparing a base tire, which is a tire body part of a used tire and will become the tire body part;
a molded tire assembly process assembling a molded tire by attaching tread rubber, which will become the tread rubber part, to outer circumference side of the base tire that is prepared;
a molded tire vulcanization process vulcanizing the molded tire that is assembled; and
a sipe formation process forming a sipe on a surface of a tread of the molded tire that is vulcanized.

2. The tire manufacturing method according to claim 1, wherein in the molded tire assembly process, the tread rubber, which has been vulcanized, is wrapped around and attached to an outer circumference of the base tire via unvulcanized cushion rubber.

3. The tire manufacturing method according to claim 1, wherein in the molded tire assembly process, the tread rubber, which has not been vulcanized, is wrapped around and attached to an outer circumference of the base tire.

4. The tire manufacturing method according to any one of claims 1 to 3, wherein in the sipe formation process, the sipe is formed avoiding a joint portion in the tire circumferential direction of the tread rubber of the molded tire.

5. The tire manufacturing method according to any one of claims 1 to 3, wherein in the sipe formation process, the sipe is formed in a straight line in a direction that is inclined with respect to the tire circumferential direction of the molded tire.

6. The tire manufacturing method according to any one of claims 1 to 3, wherein in the sipe formation process, the sipe is formed so that depth of the sipe becomes deeper as it approaches the center in the tire width direction of the molded tire.

7. The tire manufacturing method according to any one of claims 1 to 3, wherein in the sipe formation process, a plurality of the sipes are formed spaced apart from one another in the tire circumferential direction of the molded tire.
